# DEMANDE DE BREVET EUROPEEN

(11) **EP 0 922 470 A1**
(43) Date de publication de la demande: **16.06.1999**
(21) Numéro de dépôt: 98403129.4
(22) Date de dépôt: 11.12.1998
(51) Int. Cl.: A62D 3/00

(54) **Procédé de traitement de résidus, notamment de résidus d'incinération de déchets urbains ou industriels**

(30) Priorité: 12.12.1997 FR 9715770
(71) Demandeur: BUREAU DE RECHERCHES GEOLOGIQUES ET MINIERES B.R.G.M., 75739 Paris Cédex 15 (FR)
(72) Inventeur: Gaboriau, Hervé, 45100 Orleans (FR); Piantone, Patrice, 45150 Jargeau (FR); Bodénan, Françoise, 45100 Orleans (FR); Leclerq, Michel, 45160 Orleans (FR); Hau, Jean-Michel, 45130 Meung S/Loire (FR)
(74) Mandataire: Bruder, Michel

(57) **Abrégé**

La présente invention concerne un procédé de traitement de résidus solides, notamment de résidus d'incinération de déchets urbains ou industriels, contenant des métaux lourds et un produit tampon conférant au milieu des caractéristiques basiques.

Ce procédé est caractérisé en ce que l'on mélange les résidus à traiter avec un réactif constitué d'argile (Figure 3).

## Description

La présente invention concerne un procédé de traitement de résidus solides, notamment des résidus d'incinération contenant des métaux lourds, afin de rendre ceux-ci inertes tout au moins partiellement, en ce qui concerne une opération de lixiviation.

On sait en effet que certains résidus, et notamment ceux provenant de l'incinération de déchets urbains ou industriels, contiennent des métaux lourds toxiques lixiviables, en teneurs telles qu'ils sont impropres à un éventuel recyclage par exemple en tant que matériaux de génie civil.

Des limites maximales de ces éléments toxiques (notamment le plomb, le cadmium, les sulfates), qui ont été fixées par voie réglementaire dans certains pays, permettent de classer certains de ces résidus, à savoir les mâchefers provenant de l'incinération des ordures ménagères, désignés par MIOM dans le présent texte, en diverses catégories, en fonction de leurs teneurs en ces éléments. Ainsi pour être classés dans la catégorie dite "valorisable", les lixiviats de ces MIOM sont tenus de ne pas dépasser des concentrations de 10mg/kg en ce qui concerne le plomb, de 1mg/kg en ce qui concerne le cadmium et de 10g/kg en ce qui concerne les sulfates.

Afin de diminuer les concentrations en métaux lourds dans les lixiviats des MIOM on a proposé, dans l'état antérieur de la technique, de soumettre ces derniers à un traitement de maturation. Pour ce faire on expose à l'atmosphère le MIOM à traiter sur une plate-forme prévue à cet effet. Au cours de ce stockage le dioxyde de carbone atmosphérique diffuse à l'intérieur du tas de résidus et provoque une carbonatation de la chaux hydratée (portlandite) contenue dans ces derniers. Une telle évolution se traduit par une baisse du pH et par la précipitation des métaux amphotères tels que le plomb ou le zinc.

Ce type de traitement des MIOM présente de notables inconvénients. D'une première part, en raison de la durée importante du traitement, il contraint à l'immobilisation pendant ce même temps de la plate-forme de traitement, ce qui se traduit par un coût de traitement relativement élevé. De seconde part il est difficile d'obtenir une carbonatation homogène de l'ensemble du tas disposé sur la plate-forme de traitement, les parties externes atteignant l'équilibre plus rapidement que les parties disposées au centre du tas.

La présente invention propose un procédé permettant de piéger avec des argiles les métaux lourds contenus dans les résidus, de façon à diminuer la quantité de ces métaux lourds qui seront libérés par lixiviation.

On connaît bien entendu, par l'état antérieur de la technique, l'affinité des ions métalliques pour les minéraux argileux. Il s'agit la plupart du temps d'un mécanisme d'échange cationique, c'est-à-dire d'une substitution des cations échangeables de l'argile par les cations de métaux lourds présents en solution. Ce mécanisme est opérant dans des gammes de pH acide à neutre, où les principaux métaux lourds se présentent sous forme cationique.

La présente invention fait appel à un mécanisme différent puisqu'elle consiste à effectuer le piégeage des métaux lourds contenus dans les résidus par une argile sous milieu basique et préférentiellement très fortement basique. Sous ces conditions de pH les métaux lourds que la présente invention se propose de piéger (plomb, zinc, cadmium) sont en solution sous forme d'anions en raison de leur caractère amphotère.

La présente invention a ainsi pour objet un procédé de traitement de résidus solides, notamment de résidus d'incinération de déchets urbains ou industriels, contenant des métaux lourds et un produit tampon conférant au milieu des caractéristiques basiques, caractérisé en ce que l'on mélange les résidus à traiter avec un réactif constitué d'argile. Préférentiellement le pH dudit milieu sera supérieur à 12.

Bien que dans certains modes de mise en oeuvre de l'invention le produit tampon puisse contenir de la chaux, il pourra parfois être intéressant de procéder, au cours dudit procédé de traitement, à un apport extérieur de chaux.

Dans un mode de mise en oeuvre de l'invention le procédé comporte une étape consistant à échantillonner le résidu à traiter afin de déterminer la quantité de métaux lourds lixiviables qu'il contient, et à doser la quantité de réactifs à fournir en fonction de cette quantité déterminée.

L'argile pourra être utilisée notamment sous forme pulvérulente, le diamètre de ses particules étant préférentiellement inférieur à 200 µm, et pourra être constituée au moins en partie de bentonite.

Elle pourra également être utilisée sous forme dispersée dans l'eau.

Enfin on maintiendra préférentiellement l'argile en contact avec le résidu pendant une durée d'au moins une semaine avant utilisation.

Dans un mode de mise en oeuvre particulièrement intéressant de l'invention, le résidu sera traité directement en sortie du four d'incinération, avant son extinction et son refroidissement. Dans ce cas la bentonite sera utilisée sous la forme d'une suspension dans l'eau qui permettra d'effectuer également l'extinction du mâchefer. En outre, l'ajout du réactif en suspension aura pour effet de permettre une augmentation du contact entre l'argile et le mâchefer.

On décrira ci-après, à titre d'exemple non limitatif, plusieurs formes d'exécution de l'invention, en référence au dessin annexé sur lequel :

La figure 1 est une courbe qui représente la quantité cumulée totale de plomb lixiviée en fonction du nombre de cycles de lixiviation, respectivement pour un échantillon traité suivant l'invention et pour un échantillon non traité.

La figure 2 est une courbe qui représente les quantités respectives de sulfates et de plomb relarguées par un mâchefer au cours d'une opération classique de lixiviation, en fonction du taux d'argile avec lequel on a traité ce mâchefer.

Les figures 3 et 4 sont des courbes mettant en évidence les possibilités de piégeage respectifs du plomb et du zinc par de la bentonite et de la kaolinite.

La figure 5 illustre un mode de mise en oeuvre sur le plan industriel de l'invention.

Bien que la présente invention ne se limite pas au traitement des MIOM et peut également s'appliquer à celui de tout produit solide issu d'une incinération ou de procédés pyrométallurgiques, notamment aux mâchefers d'incinération de déchets industriels (MIDI), aux cendres issues de ces derniers et aux scories diverses, on décrira ci-après la mise en oeuvre du traitement appliqué à des MIOM.

Dans les essais décrits ci-après on a traité suivant l'invention un mâchefer prélevé en sortie d'une usine d'incinération. Ce mâchefer frais, prélevé après son extinction, a été passé dans un crible vibrant dont les mailles étaient de 10mm. Afin de limiter au maximum l'évolution de ce mâchefer frais au contact du dioxyde atmosphérique, ce dernier a été conditionné dans des bocaux préalablement purgés à l'azote qui ont ensuite été conditionnés en chambre froide. On a constaté que les lixiviats issus de ces MIOM étaient fortement basiques puisque leur pH était égal à 12,7.

L'argile utilisée était une bentonite sodique naturelle du Wyoming. La bentonite, sous une forme pulvérulente, dans une proportion de 5%, a ensuite été progressivement mélangée au tas de mâchefer à l'humidité de prélèvement, dans une bétonnière équipée de releveurs, de façon à assurer sa répartition homogène au sein du tas.

Ensuite 20 kg de ce mélange mâchefer-bentonite ont été mis en place dans une colonne cylindrique en PVC de 150 cm de hauteur et de 15 cm de diamètre dont la base était constituée d'un plateau circulaire perforé recouvert d'une pièce de feutre, de façon à prévenir tout entraînement du solide. Afin de bien démontrer le rôle du réactif constitué par la bentonite, des précautions ont été prises afin de limiter au maximum l'entrée de dioxyde de carbone dans l'enceinte, de façon à éviter une précipitation partielle ou totale du plomb par effet de carbonatation.

A titre de comparaison on a rempli une colonne identique avec le même mâchefer, mais sans adjonction de bentonite à celui-ci.

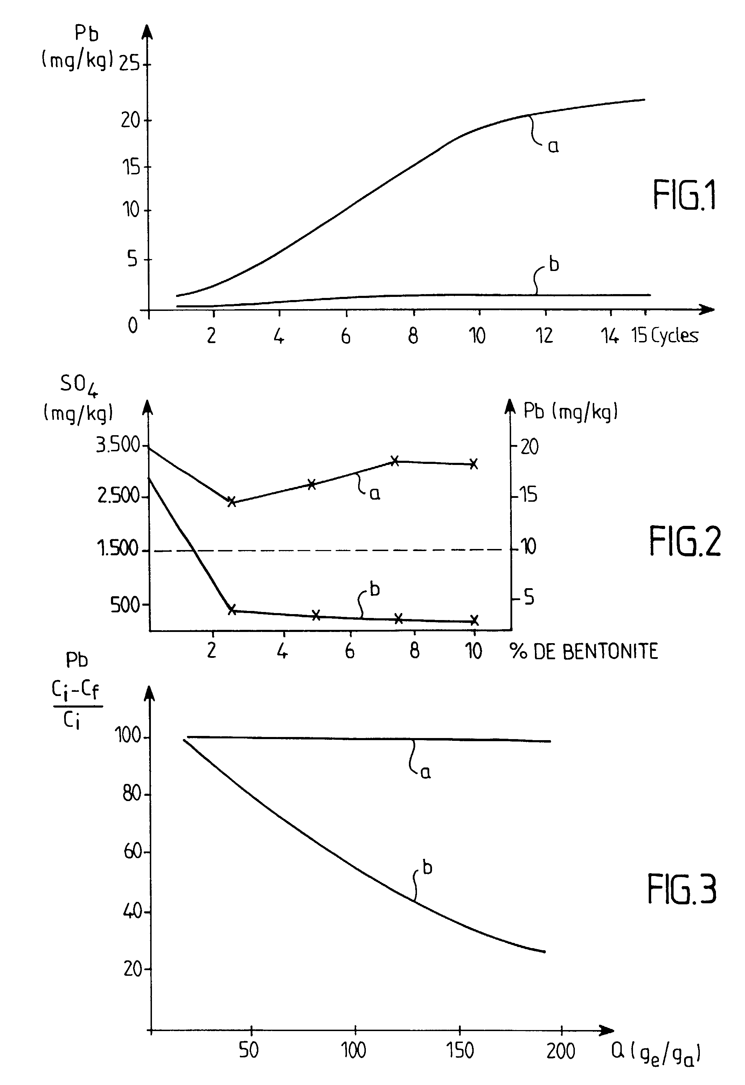

Chaque colonne a ensuite été remplie d'eau. Au bout d'une semaine de stockage ces colonnes ont été vidées et leurs lixiviats respectifs ont été recueillis pour analyse. Ces mêmes colonnes ont été de nouveau remplies d'eau et, après une nouvelle semaine de stockage, on a procédé ainsi que précédemment. On a ainsi effectué quinze cycles de lixiviation pour chacun des deux échantillons testés. Ces prélèvements ont été analysés afin de déterminer la quantité de plomb qu'ils contenaient. Les résultats ont été portés sur la figure 1 qui représente la quantité cumulée totale de plomb relarguée par le résidu en fonction du numéro du cycle de la mesure respectivement pour les échantillons sans adjonction de bentonite (courbe a) et avec adjonction de bentonite (courbe b).

On constate qu'au bout de quinze cycles (soit quinze semaines) la quantité de plomb relarguée par le résidu traité (environ 1,5 mg/kg)est minime puisque celle-ci est environ 14 fois moins forte que dans un résidu non traité par la bentonite (environ 22 mg/kg). La majorité du plomb naturel lixiviable a ainsi été fixée dans le résidu traité. Cet essai démontre bien l'efficacité du procédé en milieu naturel, notamment dans le cas de résidus disposés en tas et soumis de ce fait à un lavage sous l'effet des eaux de pluie.

Pour qu'un traitement des résidus d'incinération soit efficace il faut bien entendu qu'il soit non seulement en mesure de fixer les métaux lourds contenus dans ces résidus mais qu'il n'augmente pas outre mesure la quantité de sulfates qui sera libérée par ceux-ci au cours d'une opération de lixiviation, telle que définie par certaines voies réglementaires qui imposent que pour être valorisable un MIOM ne doit pas libérer au cours de la lixiviation une quantité de sulfates supérieure à 1Og/kg de MIOM.

Afin de déterminer l'influence du traitement suivant l'invention sur la quantité de sulfates libérés par lixiviation on a constitué cinq échantillons de mâchefer d'incinération, à savoir un échantillon témoin, sans addition de bentonite, et quatre échantillons auxquels on a respectivement ajouté 2,5%, 5%, 7,5% et 10% en poids de bentonite. Le pH des lixiviats issus de ces mâchefers était de 12,7. Ces cinq échantillons ont été soumis à une opération classique de lixiviation et on a mesuré, et représenté sur la figure 2, les quantités respectives de sulfates (courbe a) et de plomb (courbe b) relarguées au cours de celle-ci.

On constate tout d'abord sur cette figure que le traitement suivant l'invention n'a pas de résultat négatif sur la quantité de sulfates relarguée au cours de la lixiviation. On constate ensuite qu'une faible quantité de bentonite, de l'ordre de 2% en poids, est suffisante pour faire passer de 17mg/kg à 2mg/kg la quantité de plomb libérée par la lixiviation, c'est-à-dire une quantité très au-dessous de la limite précédemment mentionnée pour que les résidus soient qualifiés de valorisables.

Par ailleurs on a établi l'influence de la valeur du pH sur le caractère d'irréversibilité de la fixation du plomb et du zinc par l'argile.

Pour ce faire on a mis de la bentonite, sous forme pulvérulente, en suspension dans un lixiviat de mâchefer, puis on a baissé progressivement la valeur du pH par des ajouts successifs (Δq₁,Δq₂,Δq₃,Δq₄) d'acide nitrique à une concentration de 3N. Dès stabilisation du pH on a prélevé un certain volume de solution, qui a été analysé, afin de déterminer les quantités de plomb et de zinc respectivement contenues dans ce prélèvement. Les résultats obtenus sont consignés dans le tableau I ci-après :

**TABLEAU I**

| | **Ph** | **Concentration Plomb en solution** | **Concentration Zinc en solution** |
|---|---|---|---|
| | | **(µg/l)** | **(µg/l)** |
| **Lixiviat initial** | 12,9 | 4.384 | 1.222 |
| **Lixiviat + bentonite** | 12,1 | <5 | <5 |
| **Lixiviat + bentonite + Δq**_{**1**} | 9,1 | 7 | 10 |
| **Lixiviat + bentonite + Δq**_{**2**} | 7,4 | 14 | 12 |
| **Lixiviat + bentonite + Δq**_{**3**} | 5,1 | 384 | 394 |
| **Lixiviat + bentonite + Δq**_{**4**} | 1,8 | 4.350 | 1.110 |

On constate, sur ce tableau, qu'une fois le piégeage des métaux effectué, la rétention de ceux-ci par l'argile reste très efficace même si le pH du milieu devient relativement acide. Ainsi, des résidus traités suivant l'invention, même s'ils sont soumis à un lavage relativement acide (ce qui est le cas d'une eau de pluie puisque celle-ci peut avoir un pH de l'ordre de 5) ne relarguent pas de quantités significatives de métaux lourds.

On a également établi que dans la mise en oeuvre du procédé de traitement suivant la présente invention certaines argiles étaient plus efficaces que d'autres. On a notamment comparé les performances de fixation du plomb et du zinc respectivement par la bentonite, déjà mentionnée dans les essais précédents, et par la kaolinite.

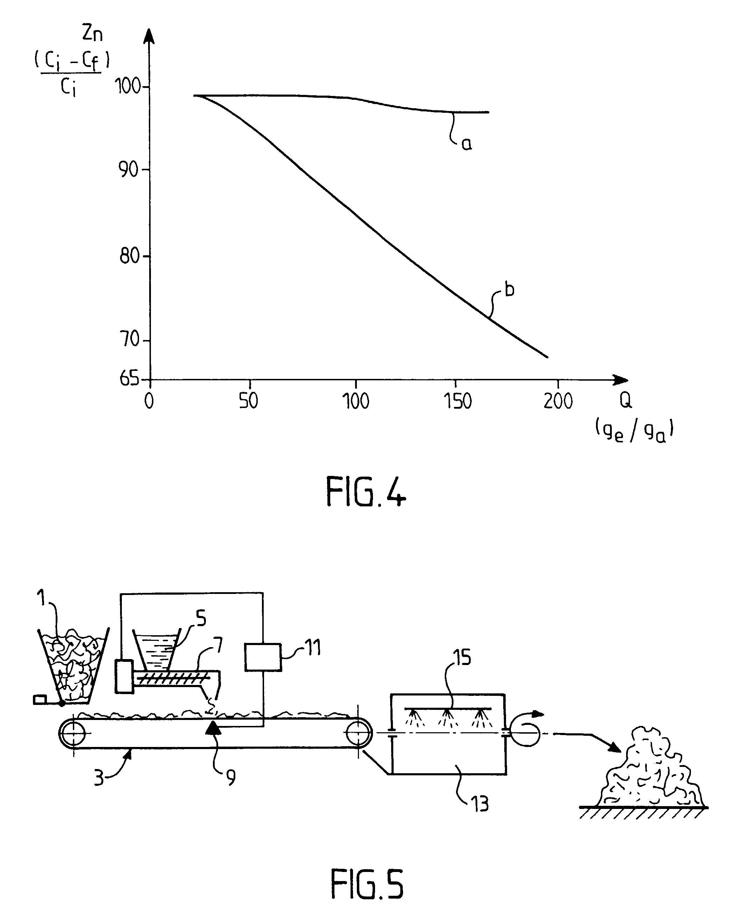

On a pour ce faire mis en suspension dans un lixiviat de mâchefer respectivement de la kaolinite et de la bentonite dans un rapport réactif/lixiviat de 1/20. Puis, après un temps nécessaire à la mise à l'équilibre, la suspension a été centrifugée et le lixiviat surnageant a été recueilli et analysé. Un nouveau volume de lixiviat de mâchefer a alors été ajouté, puis l'ensemble a été remis en suspension, puis on procède à une analyse ainsi que réalisé précédemment. Cette série d'essais a été effectuée sous atmosphère d'azote afin d'éviter les phénomènes de carbonatation précédemment mentionnés qui, dans le cas présent, auraient pour effet de masquer le rôle spécifique joué par le réactif. Le pH mesuré au cours des essais était de l'ordre de 12,5. Les résultats ont été respectivement portés sur la courbe de la figure 3 en ce qui concerne la fixation du plomb et sur la courbe de la figure 4 en ce qui concerne la fixation du zinc. Ces courbes représentent le pourcentage de fixation du métal, (c'est-à-dire le rapport de la différence entre la concentration initiale Cᵢ et la concentration finale C_{f} sur la concentration initiale, soit : Cᵢ-C_{f}/Cᵢ, en fonction de la masse Q totale (en grammes) de lixiviat ajoutée par gramme d'argile (gₗ/gₐ), respectivement effectué par de la bentonite (courbe a) et de la kaolinite (courbe b).

On constate sur ces courbes, tant en ce qui concerne le piégeage du plomb que le piégeage du zinc, que la bentonite est une argile qui est particulièrement intéressante, en raison de sa grande efficacité, pour la mise en oeuvre de l'invention.

La présente invention peut bien entendu être mise en oeuvre pour assurer le piégeage d'autres métaux lourds et notamment du cadmium, en raison de sa forte similarité, du point de vue physico-chimique, avec le plomb et le zinc.

On a représenté de façon schématique sur la figure 5 un premier mode de mise en oeuvre sur le plan industriel de l'invention. Suivant celui-ci les résidus à traiter sont admis dans une trémie 1 dans laquelle ils sont pesés, puis sont délivrés à un transporteur à courroie 3. Le réactif sous forme pulvérulente, éventuellement additionné d'un produit tampon, est contenu dans une seconde trémie 5 à partir de laquelle il est transféré, par exemple par un dispositif à vis sans fin 7, sur toute la largeur du transporteur de façon, en première approximation, à réaliser un mélange homogène dont la qualité sera améliorée par la suite. Le transporteur 3 comporte une balance intégratrice 9 qui contrôle en temps réel la quantité de résidu admis et qui est reliée à un régulateur 11 permettant d'adapter en conséquence la quantité de réactif délivrée par la vis sans fin 7. On assure ainsi en permanence le dosage de la quantité de réactif délivré par rapport à la quantité de résidu admise sur le transporteur 3. Le mélange ainsi réalisé est admis dans un tube tournant 13 qui assure une bonne homogénéisation de celui-ci. Éventuellement le tube 13 est pourvu d'une rampe de pulvérisation 15 qui permet d'humidifier le mélange de façon à favoriser le contact entre le résidu à traiter et le réactif.

Dans un second mode de mise en oeuvre sur le plan industriel de l'invention, le mâchefer en sortie du four d'incinération est éteint par sa mise en contact avec une suspension diluée de bentonite.

Après traitement le réactif est maintenu en contact avec le résidu pendant une durée d'au moins une semaine avant utilisation.

## Revendications

1. Procédé de traitement de résidus solides, notamment de résidus d'incinération de déchets urbains ou industriels, contenant des métaux lourds et un produit tampon conférant au milieu des caractéristiques basiques, caractérisé en ce que l'on mélange les résidus à traiter avec un réactif constitué d'argile.

2. Procédé suivant la revendication 1 caractérisé en ce que le pH du milieu est supérieur à 12.

3. Procédé suivant l'une des revendications 1 ou 2 caractérisé en ce que le produit tampon contient de la chaux.

4. Procédé suivant l'une des revendications précédentes, caractérisé en ce que l'argile utilisée en tant que réactif est constituée au moins en partie de bentonite.

5. Procédé suivant l'une des revendications précédentes caractérisé en ce que l'on procède à un apport extérieur de chaux.

6. Procédé suivant l'une quelconque des revendications précédentes caractérisé en ce que l'argile est utilisée sous forme pulvérulente, le diamètre de ses particules étant préférentiellement inférieur à 200 µm.

7. Procédé suivant l'une quelconque des revendications 1 à 5 caractérisé en ce que le réactif est utilisé sous la forme d'une dispersion dans l'eau.

8. Procédé suivant l'une des revendications précédentes caractérisé en ce que le résidu est traité en sortie du four d'incinération, avant son refroidissement.

9. Procédé suivant l'une des revendications précédentes caractérisé en ce qu'il comporte une étape consistant à échantillonner le résidu à traiter afin de déterminer la quantité de métaux lourds lixiviables qu'il contient, et à doser la quantité d'argile à fournir en fonction de cette quantité déterminée.

10. Procédé suivant l'une des revendications précédentes caractérisé en ce que l'argile est maintenue en contact avec le résidu pendant une durée d'au moins une semaine avant utilisation.
